(19) Europäisches Patentamt
European Patent Office
Office européen des brevets

(11) **EP 4 300 343 A1**

(12) **EUROPEAN PATENT APPLICATION**

(43) Date of publication:
**03.01.2024 Bulletin 2024/01**

(21) Application number: **22305934.6**

(22) Date of filing: **27.06.2022**

(51) International Patent Classification (IPC):
**G06F 30/10** $^{(2020.01)}$    **G06T 17/00** $^{(2006.01)}$

(52) Cooperative Patent Classification (CPC):
**G06F 30/10; G06T 17/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Dassault Systèmes**
**78140 Vélizy-Villacoublay (FR)**

(72) Inventors:
• **BRIFAULT, Lucas**
  **Vélizy-Villacoublay (FR)**
• **STATE, Alexandru**
  **Vélizy-Villacoublay (FR)**
• **BRUS, Mathieu**
  **Vélizy-Villacoublay (FR)**

(74) Representative: **Bandpay & Greuter**
  **30, rue Notre-Dame des Victoires**
  **75002 Paris (FR)**

(54) **CAD FEATURE TREE GENERATION**

(57)    The disclosure notably relates to a computer-implemented method for generating a CAD feature tree from a discrete geometrical representation of a mechanical product. The method comprises providing the discrete geometrical representation, and a set of CAD features. Each CAD feature comprises an interior and a boundary, the boundary representing a surface covered by the feature and the interior representing a surface erased by the feature. The method further comprises determining an optimal sequence of CAD features from the set of CAD features providing an optimal surface covering of the discrete geometrical representation.

FIG. 3

EP 4 300 343 A1

**Description**

**TECHNICAL FIELD**

The disclosure relates to the field of computer programs and systems, and more specifically to a method, system, and program for generating a CAD feature tree from a discrete geometrical representation of a mechanical product.

**BACKGROUND**

A number of solutions, hardware, and software are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production, and service.

Some of these systems and programs provide functionalities for processing CAD models of mechanical products.

Du et al. "InverseCSG: Automatic conversion of 3D models to CSG trees", ACM SIGGRAPH ASIA 2018, 2018, discloses a method for reverse-engineering the process by which 3D models may have been generated, in the language of constructive solid geometry (CSG). Observing that CSG is a formal grammar, the document formulates this inverse CSG problem as a program synthesis problem by a solution which is an algorithm that couples geometric processing with program synthesis techniques. In this scheme, geometric processing is used to convert the mixed discrete and continuous domain of CSG trees to a pure discrete domain where modern program synthesizers excel.

Wu et al., "Constructing 3D CSG Models from 3D Raw Point Clouds", Computer Graphics Forum, 2018, 37, pp. 221-232, discloses a method to construct CSG models and trees directly over raw point clouds. Specifically, a large number of hypothetical bounded primitive candidates are first extracted from raw scans, followed by a designed pruning strategy. The method then approximates the target CSG model by the combination of a subset of these candidates with corresponding Boolean operations using a binary optimization technique, from which the corresponding CSG tree can be derived. The method attempts to consider the minimal description length concept in the point cloud analysis setting, where the objective function is designed to minimize the construction error and complexity simultaneously.

Wang et al., "A framework for 3D model reconstruction in reverse engineering", Computers and Industrial Engineering, 2012, 63(4), pp. 1189-1200, discloses a framework for 3D model reconstruction, which has potential applications to a spectrum of engineering problems with impacts on rapid design and prototyping, shape analysis, and virtual reality. The framework, composed of four main components, provides a systematic solution to reconstruct geometric model from the surface mesh of an existing object. First, the input mesh is pre-processed to filter out noise. Second, the mesh is partitioned into segments to obtain individual geometric feature patches. Then, two integrated solutions, namely solid feature based strategy and surface feature based strategy, are exploited to reconstruct primitive features from the segmented feature patches. Finally, the modeling operations, such as solid Boolean and surface trimming operations, are performed to assemble the primitive features into the final model.

The above-mentioned methods either provide a method of CSG tree reconstruction or do not provide an automatic tool to select and order CAD features to get a CAD construction tree in an automatic way. Furthermore, some of these methods do not exploit relations between the detected primitives to speed-up the exploration during the optimization. Thus, the total computational time can be quite high. Some of the above-mentioned methods reconstruct CSG trees while CAD representations use more advanced operations than solid primitives of CSG trees to generate 3D shapes.

Within this context, there is still a need for an improved solution for processing CAD models of mechanical products.

## SUMMARY

It is therefore provided a computer-implemented method for generating a CAD feature tree from a discrete geometrical representation of a mechanical product. The method comprises providing the discrete geometrical representation, and a set of CAD features. Each CAD feature comprises an interior and a boundary the boundary representing a surface covered by the feature and the interior representing a surface erased by the feature. The method further comprises determining an optimal sequence of CAD features from the set of CAD features providing an optimal surface covering of the discrete geometrical representation.

The method may comprise one or more of the following:

- the determining of an optimal sequence of CAD features comprises iterations of adding a CAD feature to an intermediate sequence resulting from a previous iteration by selecting the CAD feature from the set, the selection being based on a surface covering score, wherein the surface covering score represents a surface covering reachable when adding the CAD feature to the intermediate sequence;
- the selection of the added CAD feature is based on a highest surface covering score;
- the surface covering score comprises a ratio between a surface covering reachable by the intermediate sequence when adding the CAD feature, and a surface area of the discrete geometrical representation;
- each iteration further comprises removing the added CAD feature from the set of CAD features;
- the selection of the CAD feature comprises excluding from the selection:

    ∘ CAD features which cover a surface already covered by a result of the intermediate sequence, and/or
    ∘ CAD features which erase at least a part of a surface covered by the feature added at the previous iteration and covering a surface that is not erased by the feature added at the previous iteration;

- the method further comprises, before the determining of an optimal sequence computing a feature order of the set of CAD features, the feature order ordering a first CAD feature relative to a second feature when the first CAD feature erases at least a part of a surface covered by the second CAD feature and covering a surface that is not erased by the second CAD feature;
- the method further comprises, before the determining of an optimal sequence partitioning a surface of the discrete geometrical representation into meta-faces each comprising one or more faces, each two faces of a meta-face being erased and covered by same one or more CAD features; and/or
- the method further comprises building a feature tree from the determined optimal sequence of CAD features.

It is further provided a computer program comprising instructions for performing the method.
It is further provided a computer readable storage medium having recorded thereon the computer program.
It is further provided a system comprising a processor coupled to a memory, the memory having recorded thereon the computer program.

## BRIEF DESCRIPTION OF THE DRAWINGS

Non-limiting examples will now be described in reference to the accompanying drawings, where:

- FIG. 1 shows an example of a graphical user interface of the system;
- FIG. 2 shows an example of the system; and
- FIG.s 3 to 5 illustrate the method.

## DETAILED DESCRIPTION

It is hereby proposed a computer-implemented method for generating a CAD feature tree from a discrete geometrical representation of a mechanical product. The method comprises providing the discrete geometrical representation and a set of CAD features. Each CAD feature of the set comprises an interior and a boundary. The boundary represents a surface covered by the feature and the interior represents a surface erased by the feature. The method further comprises determining an optimal sequence of CAD features from the set of CAD features. The optimal sequence of CAD features provides an optimal surface covering of the discrete geometrical representation.
This constitutes an improved solution for processing CAD models of a mechanical product. The generation of a CAD feature tree from a discrete geometrical representation of a mechanical product allows to prepare the mechanical product (by preparing its CAD feature) in view of the manufacturing and is particularly relevant in the field of manufacturing CAD as discussed hereinbelow. In the manufacturing CAD, generating a CAD feature tree allows an easy manipulation

EP 4 300 343 A1

and/or editability and/or efficient storage in memory. Notably, the method obtains a CAD model which comprises or consists in the determined optimal sequence of CAD features, or the determined CAD feature tree obtained therefrom. Notably, such a computer-implemented method for generating a CAD feature tree from a 3D discrete geometrical representation is capable to assess quality of the generated CAD feature by computing an accuracy of said CAD feature tree and/or to minimize a complexity of said CAD feature tree with respect to custom criteria. Such a computer-implemented method may form or a be a part of an automated computer-implemented method for such a purpose and without any human (e.g., a user or more specifically a technician).

Specifically, the method provides an improved solution for generating CAD feature tree from a discrete geometrical representation of the mechanical product. The method generates (i.e., determines) an optimal sequence of CAD feature as CAD feature tree with an optimal covering of the discrete geometrical representation. Such an optimal covering provided by the optimal sequence represents an optimal representation of the discrete geometrical representation by the features present in said sequence. Thereby the method determines a CAD feature tree with a maximum fidelity to the input (i.e., provided) discrete geometrical representation and the mechanical product thereof. The method determines such a covering by using the definition of the CAD feature comprising an interior and a boundary.

As discussed above, the method comprises providing the discrete geometrical representation, and a set of CAD features. By "providing" an input (e.g., the 3D discrete geometrical representation, or the set of CAD features), it is meant obtaining said input by the method. Such an obtaining may mean or comprise either downloading said input (e.g., from an online database, or an online cloud), or retrieving said input from a memory (e.g., a persistent memory). Alternatively, such an obtaining may comprise creating the set of CAD features, for example by detecting at least some the CAD features from the provided discrete representation.

The provided discrete geometrical representation may stem from physical measurements on a real object (e.g., the mechanical part), for example within a reconstruction process as discussed hereinbelow, e.g., a scanning of the real object (e.g., a 3D scanning). In such cases, the providing of the discrete geometrical representation may comprise the reconstruction process which obtains the discrete geometrical representation of the mechanical product from physical measurements.

Exploiting such discrete geometrical representations obtained by a reconstruction process have some practical challenges. In particular, such representations may comprise significant amount of noise (e.g., due to limited precision of sensors used to perform the physical measurements on the real object), be incomplete (e.g., due to inaccessibility of some parts of the real object to perform the physical measurement), and/or be not accompanied by a respective CAD feature tree. Each of said challenges may impede using the provided discrete geometrical representation in reverse engineering applications, as it reduces the accuracy of a final manufactured object and/or restricts the ability of a user to apply modifications before finalizing the mechanical product to be manufactured.

The provided discrete geometrical representation may alternatively originate from a CAD or CAE model designed by another CAD system and for which the CAD feature tree is unknown. In such cases, the providing of the discrete geometrical representation may comprise inputting (e.g., by reading from a local memory or a remote database) the discrete geometrical representation (e.g., upon a transform from an existing CAD/CAE model), and generating a respective CAD feature tree based on the inputted discrete geometrical representation.

As discussed above, the method comprises providing the set of CAD features. As known *per se* a "CAD feature" or equivalently a geometric CAD feature is a parametric shape description of a space region with particular geometric or topological properties. As known *per se* from CAD, a CAD feature includes shape/geometry information and parametric information for representing a portion of the manufacturing product modeled/captured by the CAD feature. The CAD feature may as known comprise a definition/specification of a geometry/shape corresponding to the portion modeled by the CAD feature (e.g. a definition/specification geometric primitive) and one or more CAD parameters that specify the geometry and its topology.

The concept of CAD feature tree is well-known in CAD. The (CAD) feature tree is a tree organization of CAD operations (e.g. including Boolean and non-Boolean operations) on CAD features that each model a portion of the manufacturing product. More specifically, the feature tree is a directed acyclic graph (as discussed in https://en.wikipedia.org/wiki/Directed acyclic graph) that describes/captures the order of sequence and combination of the CAD operations. The feature tree thus includes one or more CAD parameters each being respective to a respective CAD feature of the feature tree. Non-limitative examples of such CAD parameters include: coordinates of a point in a sketch, height of extrusion of a profile, thickness of a shell, radius of a fillet, and smoothness of a loft surface.

Thereby, the provided set of CAD features may optionally be in correspondence to a provided set of parameters. The provided set of parameters may comprise a plurality of groups of parameters such that each group of parameter corresponds to a CAD feature in the provided set of parameters. Yet optionally, the provided set of CAD features may comprise or consist in detected features from the provided discrete geometrical representation. In such cases, the providing of the set of CAD features may further comprise performing a feature detection method on a set of discrete geometrical representations (among which the provided discrete geometrical representation) to obtain one or more detected features, and to insert the one or more detected features in the provided dataset.

4

The method may comprise providing a large set of CAD features. Additionally or alternatively, the providing of the set may comprise providing a tailor-made set from a relevant technical field in which the mechanical product supposed to be used (e.g., features presenting standard holes according to a known standard in said technical field).

Each CAD feature of the provided set of CAD features comprises an interior and a boundary. The boundary of a feature represents a surface covered by the feature and the interior of a feature represents a surface erased by the feature. Each CAD feature of the set thus corresponds to a respective volume. In examples where the discrete geometrical representation is a 2D representation, by a surface it is meant one or more straight and/or curved line segments (e.g., a poly line), and the respective volume means an area of Hausdorff measure of dimension 2 in 2D space. In this regard, each surface of the discrete geometrical representation (e.g., one or more mesh's faces when the discrete geometrical representation is a mesh or when the mesh is obtained from a conversion of a respective point cloud as the provided discrete geometrical representation as discussed hereinbelow) may be described using a combination of one or more CAD features via their respective interior and boundary and/or the respective volume. In examples where the discrete geometrical representation is 2D, said surface area may be a length measure on said line segments. The boundary of a feature with respect to a mesh may correspond the mesh's faces covered by the feature and the interior may correspond the mesh's faces erased by the feature. Such a representation is built using computational geometry and improves the generation of CAD feature tree by enabling the computation of a new partition of the input discrete geometrical representation to speed-up the computational time. In implementations let M be the representation embedded in $\mathbb{R}^d$ , where $d$ = 2 or 3. A feature $f$ then is an object defined by two open disjoints domains $f_-$ and $f_+$ of $\mathbb{R}^d$ , where $\Omega(f) = f_- \cup f_+$, and $\Omega(f)$ is the respective volume of the feature, i.e., (total) volume/domain occupied by the feature in the $\mathbb{R}^d$ space. The interior of $f$ with respect to $M$ is defined by $f_{(\pm)}^M = f_{(\pm)} \cap M$ . Furthermore, $\partial f_+^M$ (resp. $\partial f_-^M$ ) is the positive boundary (resp. negative boundary) of $f$ with respect to $M$.

As discussed above, the method comprises determining an optimal sequence from the CAD features of the provided set. By "determining of an optimal sequence of CAD features from the set of CAD features" it is meant selecting one or more CAD features in an order (in order to form a sequence) from the provided set. In other words, the provided set is a pool of candidate CAD features to form the sequence. By "optimal" in "determining an optimal sequence" it is meant that the determined sequence has an optimal surface covering of the discrete geometrical representation. By a "surface covering" of the discrete geometrical representation provided by the determined sequence of CAD features it is meant a quantification of an intersection between a boundary of an object represented by a CAD feature tree based on the determined sequence and the discrete geometrical representation. The "optimal surface covering" is the surface covering with significantly large value, i.e., when the cover represented by a CAD feature tree is significantly intersects with the discrete geometrical representation. The method constitutes an improved solution to obtain such an optimal sequence with optimal surface covering by determining the features of the sequence from a finite set of provided CAD features. Furthermore, the method enables controlling the optimality of the determined sequence by controlling the provided set of CAD features, for example by providing a tailor-made set of CAD features for particular applications of the mechanical product, or a set of CAD feature which comprises (at least partially) the detected features of the provided discrete geometrical representation.

The method may further comprise building a feature tree from the determined optimal sequence of CAD features. By "building a feature tree" it is meant an instantiation of the feature tree, i.e., setting the determined (optimal) sequence CAD features in a data format of feature tree. In other words, the method, upon determination of the sequence of the CAD features may instantiate a CAD feature tree from said sequence (i.e., using the CAD feature of the sequence and according to an order imposed by the sequence), for example in a memory. The memory is any memory adapted for such an instantiation.

As previously mentioned, the generating of the CAD feature tree is particularly relevant in the field of manufacturing CAD, that is, for software solutions to assist design processes and manufacturing processes, whereby the objective is to produce a physical product corresponding to a designed CAD model (e.g., a CAD 3D model). Within this context, the CAD model represents a manufacturing product, that may be manufactured downstream to its design. The method may thus be part of such a design and/or manufacturing process of a mechanical product. The method may be part of or may form a design process where the method forms the step of obtaining feature tree from the representation of a mechanical product. This step of obtaining the feature tree may form a step of CAE to CAD conversion. "Designing a manufacturing/mechanical product" designates any action or series of actions which is at least a part of a process of elaborating a modeled object of the manufacturing product/mechanical part/mechanical product.

The method thus generally manipulates modeled objects, such as a discrete geometrical representations and to output a CAD feature tree of the discrete geometrical representation. A modeled object is any object defined by data stored e.g., in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (e.g., a CAD system or a CAD software), it is additionally meant any system, software or hardware, adapted at least for designing a modeled object on the basis of a graphical representation of the modeled object and/or on a structured representation thereof (e.g., a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g., non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object, e.g., representing a product such as a part or an assembly of parts, or possibly an assembly of products. The 3D modeled object may be a manufacturing product, i.e., a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e., increases the speed at which designers statistically accomplish their task). This speeds up the manufacturing process in the industry, as the design of the products is part of the manufacturing process.

The 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electromechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e., the designer/user) using standard modeling features (e.g., extrude, revolute, cut, and/or round) and/or standard surfacing features (e.g., sweep, blend, loft, fill, deform, and/or smoothing). Many CAD systems supporting such modeling functions are history-based system. This means that the creation history of design features is typically saved through an acyclic data flow linking the said geometrical features together through input and output links. The history-based modeling paradigm is well known since the beginning of the 80's. A modeled object is described by two persistent data representations: history and B-rep (i.e., boundary representation). The B-rep is the result of the computations defined in the history. The shape of the part displayed on the screen of the computer when the modeled object is represented is (e.g., a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent. As discussed above, the generating of a CAD feature tree from a respective discrete geometrical representation provides an easy manipulation/editability and/or efficient storage, thereby improving the performance of a history-based CAD system.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, salespeople and buyers. A PDM solution is generally based on a product-oriented database. It allows the actors to share consistent data on their products and therefore prevents actors from using divergent data. Such PDM solutions are provided by Dassault Systèmes under the trademark ENOVIA®.

The method generates a CAD feature tree from a provided discrete geometrical of a mechanical product. Thereby the modeled object taken as input by the method is a discrete geometrical representation of a mechanical product. The discrete geometrical representation is a data structure which comprises a discrete set of pieces of data. Each piece of data may specify an element of the product/mechanical part, and be referred to as a discrete element. The discrete geometrical representation may be 3D or alternatively 2D. Yet alternatively, the discrete geometrical representation may be both 3D and 2D, i.e. may comprise a 3D portion which is a 3D discrete geometrical representation and a 2D portion which is a discrete geometrical representation, such as a hybrid 3D-2D meshing (e.g. for modeling a product comprising both thin parts, modeled with the 2D portions, and thick parts, modeled with the 3D portions). The discrete geometrical representation may in examples comprise a number of such pieces of data higher than 100, 1000, or 10000.

In case of a 3D discrete geometrical representation, the 3D discrete geometrical representation may be a solid/volume 3D discrete geometrical representation of the mechanical product. In examples, such a representation may be a solid 3D finite element model (FEM), a 3D volume mesh (e.g. a 3D tetrahedral mesh), or a 3D point cloud. Optionally, the 3D mesh may be obtained from a conversion of a respective 3D point cloud by any known method, for example by triangulating the 3D point cloud (e.g., with a Delaunay triangulation). In such a case, each piece of data may represent a respective geometrical entity positioned in a 3D space such that the pieces of data form a solid representation of the mechanical product (i.e., "solid 3D discrete geometrical representation"). Each geometrical entity may represent a respective location (i.e., a material point) of the 3D object (in other words, a respective portion of material constitutive of a solid represented by the 3D object). In examples where the 3D discrete geometric representation is a 3D point cloud, each geometrical entity is a point residing in the volume occupied by the mechanical product. In examples where the 3D discrete geometric representation is a 3D mesh, each geometrical entity being a volume element of the mesh. The aggregation (i.e., union or juxtaposition) of the geometrical entities represents altogether the 3D object as a solid/volume.

The 3D discrete geometrical representation may alternatively be a skin 3D discrete geometrical representation, representing a skin of the mechanical product, such as a 3D surface mesh (e.g. a triangular surface mesh), a tessellation, or a 3D point cloud. Such a skin may represent at least part of the outer surface of the mechanical product. Optionally, the 3D mesh may be obtained from a conversion of a respective 3D point cloud by any known method, for example by triangulating the 3D point cloud (e.g., with a Delaunay triangulation). In such a case, each piece of data may represent a respective geometrical entity positioned in a 3D space, such that the pieces of data form a representation of the mechanical product's skin (i.e., "skin 3D discrete geometrical representation"). In such a case, each geometrical entity represents a respective location (i.e., a material point) on an outer surface of the 3D object (in other words, a respective portion of outer surface of the volume occupied by material constitutive of a solid represented by the object). In examples where the 3D discrete geometric representation is a 3D point cloud, each geometrical entity is a point residing on the skin of the mechanical product. In examples where the 3D discrete geometric representation is a 3D mesh, each geometrical entity being a tile or face of the mesh. The aggregation (i.e., union or juxtaposition) of the geometrical entities represents altogether at least part of the outer surface of the object.

In the case of a 2D discrete geometrical representation, each piece of data may represent a respective geometrical entity positioned in a 2D space. The 2D discrete geometrical representation may be a 2D point cloud, a 2D finite element mesh, or any 2D mesh. In the case of 2D point cloud, the method may perform a tessellation on the provided 2D point cloud to obtain a 2D mesh. Each element of the 2D (e.g., finite element) mesh may be composed of straight segments or curved segments (e.g., spline or circular arcs). The discrete geometrical representation may be associated with one or more thickness value(s), for example a distribution of thickness value over its finite elements). In such examples, each geometrical entity being a line segment of the mesh. However, the face (of a mesh) may equivalently refer to such line segments as well. Such a 2D discrete geometrical representation may for example represent a generally planar product (which is a 3D object), such as a stamping part (e.g., with a constant thickness value) or a composite material part (e.g., with different thickness values).

The discrete geometrical representation may be or may stem from a CAE model, also referred to as "finite element model (FEM)". The CAE model may stem from a CAD model representing the mechanical part/product, e.g. the method comprises at an initial stage obtaining the CAE model from the CAD model, for example using a meshing (e.g. triangulation) process. Conversely, a CAE model may be converted into a CAD model. The method may design/output a CAE model which may be then converted into a corresponding CAD model. The method may comprise, or may be included in wider process that comprises, or may form a solution to, (e.g. automatically) converting the CAE model designed/outputted by the method into a CAD model, by using any known (e.g. automatic) CAE to CAD conversion process that converts a CAE model into a CAD model.

The discrete geometrical representation (e.g., a point cloud, a surface mesh, or a mesh) may be determined from physical measurements on a real object, for example within a (e.g., 3D) reconstruction process. Such a reconstruction process may comprise providing the real object, providing one or more physical sensors each configured for acquiring a respective physical signal, and acquiring one or more respective physical signals by operating the one or more physical sensors on the real object (i.e., scanning the real object with each sensor). The reconstruction may then automatically determine a discrete geometrical representation based on the measurements, according to any known technique. The one or more sensors may comprise a plurality of (e.g., RGB, and/or image or video) cameras and the determination may comprise a structure-from-motion analysis. The one or more sensors may alternatively or additionally comprise one or more depth sensors (e.g., on an RGB-depth camera) and the determination may comprise a reconstruction from depth data. The one or more depth sensors may for example comprise a laser (e.g., a lidar) or an ultrasound emitter-receiver.

The discrete geometrical representation may alternatively be obtained from a modeled object representing a skin (i.e., outer surface) of a solid or mechanical product for example by ray casting on the modeled object or tessellating the modeled object. The tessellating may be performed according to any modeled object rendering process. Such a rendering process may be coded on any CAD system in order to display a graphical representation of the modeled object. The modeled object may be designed or have been designed by a user with a CAD system.

As discussed above, the modeled object outputted by the method is a CAD model, for example comprising or consisting in a CAD feature tree (e.g., the CAD feature tree which corresponds to the determined sequence) and/or a B-rep (e.g., upon a conversion from the determined CAD feature tree).

The CAD model is feature-based (e.g. it may comprise a CAD feature tree, and optionally a corresponding B-rep obtained by executing the CAD feature tree). A feature-based 3D or 2D model allows (e.g. during the determination of a manufacturing file or CAM file as discussed hereinafter) the detection and an automatic resolution of a geometry error in a CAD model such as a clash that will affect the manufacturing process. A clash is an interpenetration between two parts of a model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based model allows (e.g. during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

The generation of a custom computer program from CAD files may be automated. Such generation may therefore be error prone and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D or 2D designs.

The B-Rep (i.e., boundary representation) is a representation of a mechanical part. Specifically, the B-Rep is a persistent data representation describing the modeled object representing the mechanical part. The B-Rep may be the result of computations and/or a series of operations carried out during a designing phase of the modeled object representing the mechanical part. The shape of the mechanical part displayed on the screen of the computer when the modeled object is represented is (e.g. a tessellation of) the B-Rep. In examples, the B-Rep represents a part of the model object.

A B-Rep includes topological entities and geometrical entities. Topological entities are: face, edge, and vertex. Geometrical entities are 2D or 3D objects: surface, plane, curve, line, point. By definition, a face is a bounded portion of a surface, named the supporting surface. An edge is a bounded portion of a curve, named the supporting curve. A vertex is a point in 2D or 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick volume (e.g., a 3D volume) because it defines the inside portion of space (virtually) enclosing material. An open B-Rep is used to model a skin (e.g., a 3D skin), which represents an object (e.g., a 3D object) the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep does not contain any history-based information.

The method may be included in a production process, which may comprise, after performing the method, producing a physical product corresponding to the modeled object outputted by the method. The production process may comprise the following steps:

- (e.g. automatically) applying the method, thereby obtaining the CAD model or CAE model outputted by the method;
- optionally, (e.g. automatically) converting the obtained CAE model into a CAD model as previously discussed, using a (e.g. automatic) CAE to CAD conversion process; and
- using the obtained CAD model for manufacturing the mechanical product.

Converting the CAE model into a CAD model may comprise executing the following (e.g. fully automatic) conversion process that takes as input a CAE and converts it into a CAD model comprising a feature-tree representing the mechanical product. The conversion process includes the following steps (where known fully automatic algorithms exist to implement each of these steps):

- segmenting the CAE model, or an outer surface/skin thereof, thereby obtaining a segmentation of the CAE model into segments, e.g. each forming a surface portion of the model;
- detecting geometries of CAD features by processing the segments, e.g. including detecting segments or groups of segments each forming a given CAD feature geometry (e.g. an extrusion, a revolution, or any canonic primitive), and optionally geometric characteristics thereof (e.g. extrusion axis, revolution axis, or profiles);
- parameterizing the detected geometries, e.g. based on the geometries and/or on said geometric characteristics thereof;
- fitting CAD operators each to a respective portion of the CAE model, based on a geometry of said portion, for example by aggregating neighboring segments detected as being part of a same feature geometry;
- encoding the geometries and the corresponding CAD operators into a feature tree;
- optionally, executing the feature tree, thereby obtaining a B-rep representation of the product; and
- outputting the feature tree and optionally the B-rep, the feature tree and optionally the B-rep forming the CAD model.

Using a CAD model for manufacturing designates any real-world action or series of action that is/are involved in/participate to the manufacturing of the mechanical product represented by the CAD model. Using the CAD model for manufacturing may for example comprise the following steps:

- editing the obtained CAD model;
- performing simulation(s) based on the CAD model or on a corresponding CAD model (e.g. the CAE model from which the CAD model stems, after a CAE to CAD conversion process), such as simulations for validation of mechanical, use and/or manufacturing properties and/or constraints (e.g. structural simulations, thermodynamics simulation, aerodynamic simulations);
- editing the CAD model based on the results of the simulation(s);
- (i.e. depending on the manufacturing process used, the production of the mechanical product may or may not comprise this step) (e.g. automatically) determining a manufacturing file/CAM file based on the (e.g. edited) CAD model, for production/manufacturing of the manufacturing product;
- sending the CAD file and/or the manufacturing file/CAM file to a factory; and/or
- (e.g. automatically) producing/manufacturing, based on the determined manufacturing file/CAM file or on the CAD model, the mechanical product originally represented by the model outputted by the method. This may include feeding (e.g. automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, e.g. upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (i.e. a designer), performing one or more of the CAD models, e.g. by using a CAD solution. The modifications of the CAD model may include one or more modifications each of a geometry and/or of a parameter of the CAD model. The modifications may include any modification or series of modifications performed on a feature tree of the model (e.g. modification of feature parameters and/or specifications) and/or modifications performed on a displayed representation of the CAD model (e.g. a B-rep). The modifications are modifications which maintain the technical functionalities of the part/product, i.e. the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) solution for (e.g. automatically) determining a production file from the CAD model (e.g. any automated CAD-to-CAM conversion algorithm).

The product/part may be an additive manufacturable part, i.e. a part to be manufactured by additive manufacturing (i.e. 3D printing). In this case, the production process does not comprise the step of determining the CAM file and directly proceeds to the producing/manufacturing step, by directly (e.g. and automatically) feeding a 3D printer with the CAD model. 3D printers are configured for, upon being fed with a CAD model representing a mechanical product (e.g. and upon launching, by a 3D printer operator, the 3D printing), directly and automatically 3D print the mechanical product in accordance with the CAD model. In other words, the 3D printer receives the CAD model, which is (e.g. automatically) fed to it, reads (e.g. automatically) the CAD model, and prints (e.g. automatically) the part by adding together material, e.g. layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, e.g. by a user (e.g. an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (e.g. automatically by the 3D printer or a computer system controlling it) from the CAD model, a printing direction, for example to minimize overhang volume (such as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (i.e. a part manufactured by machining), such as a milled part (i.e. a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (e.g. automatically) checking if the CAD model has any geometric particularity (e.g. error or artefact) that may affect the production process and (e.g. automatically) correcting such particularities. For example, machining or milling based on the CAD model may not be carried out if the CAD model still comprises sharp edges (because the machining or milling tool cannot create sharp edges), and in such a case the determination of the CAM file may comprise (e.g. automatically) rounding or filleting such sharp edges (e.g. with a round or fillet radius that corresponds, e.g. substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (e.g. rounding or filleting of geometries) may be carried out automatically as previously discussed, but also, by a user (e.g. a machining engineer), which performs the correction by hand on a CAD and/or CAM solution, e.g. the solution constraining the user to perform corrections that make the CAD model compliant with specifications of the tool used in the machining process.

Further to the check, the determination of the CAM file may comprise (e.g. automatically) determining the machining or milling path, i.e. the path to be taken by the machining tool to machine the product. The path may comprise a set of coordinates and/or a parameterized trajectory to be followed by the machining tool for machining, and determining the path may comprise (e.g. automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, e.g. that the tool continuously follows without breaking contact with the material to be cut. Alternatively, the path may be a concatenation of a sequence sub-paths to be followed in a certain order by the tool, e.g. each being continuously followed by the tool without breaking contact with the material to be cut. Optionally, the determination of the CAM file may then comprise (e.g. automatically) setting machine parameters, including cutting speed, cut/pierce height, and/or mold opening stroke, for example based on the determined path and on the specification of the machine. Optionally, the determination of the CAM file may then comprise (e.g. automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (e.g. directly and automatically) fed to the machining tool and/or the machining tool may then (e.g. directly and automatically) be programmed by reading the file, upon which the production process comprises the producing/manufacturing step where the machine performs the machining of the product according to the production file, e.g. by directly and automatically executing the production file. The machining process comprises the machining tool cutting a real-world block of material to reproduce the geometry and/or distribution of material captured by the CAD model, e.g. up to a tolerance error (e.g. tens of microns for milling).

The product/part may alternatively be a molded part, i.e. a part manufactured by molding (e.g. injection-molding). In such a case, the production process may comprise the step of determining the CAM file. This step may be carried out automatically, by any suitable CAM solution to automatically obtain a CAM file from a CAD model of a molded part. The determining of the CAM file may comprise (e.g. automatically) performing a sequence of molding checks based on the CAD model to check that the geometry and/or distribution of material captured by the CAD model is adapted for molding, and (e.g. automatically) performing the appropriate corrections if the CAD model is not adapted for molding. Performing the checks and the appropriate corrections (if any) may be carried out automatically, or, alternatively, by a user (e.g. a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known per se from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (e.g. automatically) performing the molding based on the outputted file, where the mold shapes, for the determined hardening time, a liquid material into a shape that corresponds to the geometry and/or distribution of material captured by the CAD model, e.g. up to a tolerance error (e.g. up to the incorporation of draft angles or to the modification of draft angles, for demolding).

The product/part may alternatively be a stamped part, also possibly referred to as "stamping part", i.e. a part to be manufactured in a stamping process. The production process may in this case comprise (e.g. automatically) determining a CAM file based on the CAD model. The CAD model represents the stamping part, e.g. possible with one or more flanges if the part is to comprise some, and possibly in this latter case with extra material to be removed so as to form an unfolded state of one or more flanges of the part, as known per se from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (e.g. automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, e.g. as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, e.g. directly and automatically, the CAM file, and perform the stamping process (e.g. automatically) based on the file. The stamping process may comprise stamping (e.g. punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length, and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

In examples, the determining of an optimal sequence of CAD features comprises iterations of adding a CAD feature to an intermediate sequence resulting from a previous iteration. This signifies that the determining of an optimal sequence may be an iterative process, starting by one CAD feature from the set in the first iteration to form an intermediate sequence for the first iteration. Each next iteration adds a CAD feature to the intermediate sequence of the preceding iteration to from a respective intermediate sequence of the next iteration. The determined optimal sequence is thus formed in the final iteration by adding a CAD feature to the respective intermediate iteration of the last to final iteration.

The adding of the CAD feature may comprise selecting the CAD feature from the set of CAD features. Such a selection may be based on a surface covering score. By being "based on a surface covering score" it is meant the selection is at least partially based on said covering score of the formed intermediate sequence at each iteration. In other words, the selection takes into account, by using the covering score, how well the formed intermediate sequence covers the surface of the discrete geometrical representation of the mechanical product. The surface covering score (in an iteration) may represent a surface covering reachable when adding the (selected) CAD feature to the intermediate sequence (i.e., the intermediate sequence resulting from a previous iteration). By the "surface covering reachable" of a given sequence of features it is meant an upper bound of the surface covering obtainable from the given sequence of features, i.e., an unsurpassable surface covering. In other words, the surface covering score of a sequence provides an upper bound on the surface covering of the discrete geometrical representation by said sequence. The surface covering of the discrete geometrical representation by a sequence may be an intersection of the discrete geometrical representation and the boundary of a feature resulting from the sequence. Additionally, the method may select the CAD feature from the set based on other criteria (than the covering score), for example, the number of containing features or any other criteria defined by the user, for example, physical simulation criteria.

The method may terminate performing the iterations if the surface covering score of the intermediate sequence upon adding the selected CAD feature is above a first threshold. In other words, the method may terminate the iterations if the determined sequence has a sufficiently high accuracy (i.e., fidelity to the inputted discrete geometrical representation). Alternatively or additionally, the method may terminate performing the iterations upon an action by a user (e.g., when the user is satisfied with the generated CAD feature). In examples where the selection is based on the number of containing features, the method may additionally or alternatively terminate performing the iterations if the number of features of the intermediate sequence formed at an iteration is larger than a second threshold. In examples where the selection is based on physical simulation criteria, the method may additionally or alternatively terminate performing the iterations if a corresponding error of a physical simulation based on the intermediate sequence of an iteration is smaller than a third threshold (e.g., after obtaining a corresponding finite element mesh from the CAD feature tree respective to the intermediate sequence, and performing a physical simulation on the obtained mesh).

This constitutes an improved solution for generating the CAD feature tree of a discrete geometrical representation of a mechanical product by providing a step-by-step procedure to determine an optimal sequence. In such a procedure, the generating the CAD feature tree is performed in an iterative way such that in each iteration a new feature is selected from the provided set and added to the sequence based on a surface covering score, thereby providing an assessment of how well the determined sequence represents the mechanical product (e.g., by comparing to the above-discussed first, second, and/or third threshold). This iterative procedure further enables the addition of a feature to maximize the potential covering at each step.

The selection of the added CAD feature may be based on a highest surface covering score. By "based on a highest surface covering score" it is meant that the method at each iteration may select a CAD feature tree from the provided set such that, when added to the intermediate sequence of the previous iteration, results in a highest covering score of the intermediate sequence of the current iteration. This may be particularly efficient to obtain a feature tree which accurately represents the discrete geometrical representation of the mechanical product.

The surface covering score may comprise a ratio between a surface covering reachable by the intermediate sequence (resulting from a previous iteration) when adding the CAD feature, and a surface area of the discrete geometrical representation. The surface area of the discrete geometrical representation may be the external surface area of the discrete geometrical representation. In examples where the discrete geometrical representation is a mesh, the surface area may be a sum of surface area of its faces. This provides a simple indicator to be calculated in the selection of the CAD feature, thereby improving the computational efficiency of the method.

In examples, each iteration further comprises removing the added CAD feature from the set of CAD features. In other words, when a CAD feature in the set is selected to be added to an intermediate sequence, the method removes the selected CAD feature from the set, thereby the method may comprise an updating of the set of CAD features in each iteration. Each next iteration may then select a CAD feature in such an updated set of CAD features. In such examples, the method may (additionally to the termination examples discussed above) terminate performing the iterations when the updated set of CAD features is empty, i.e., no features left to add to the intermediate sequence resulting from the previous iteration.

This constitutes an improved solution because adding a CAD feature which already exists in the intermediate sequence of the previous iteration does not change the surface covering of the new intermediate iteration and merely increases the number of features in the sequence. In that direction, removing the added CAD features from the set decrease the size of the set at each iteration thereby decreasing the computational cost of selecting the CAD feature from the set based on a surface covering score for the following iteration.

In examples, the selection of the CAD feature comprises excluding from the selection the CAD features which cover a surface already covered by a result from the intermediate sequence. The result from the intermediate sequence may be a feature tree resulting from the intermediate sequence. The feature tree resulting from the intermediate sequence may form a(n accumulative) feature. In other words, at each iteration the method may check if a CAD feature of the (optionally updated) set of CAD features covers a surface which is already covered by the feature formed by the feature tree resulting from the intermediate sequence of the previous iteration. The formed feature may cover all (i.e., entire) the surface covered by the CAD feature. In such examples, when the formed feature covers (e.g., all) the surface covered by a CAD feature, the method does not select said CAD feature to add to the intermediate sequence. This constitutes an improved solution by excluding the CAD features from the selection which do not improve the surface covering of the discrete geometrical representation.

Alternatively or additionally, the selection of the CAD feature may comprise excluding from the selection the CAD features which erase at least a part of a surface covered by the feature added at the previous iteration and covering a surface that is not erased by the feature added at the previous iteration. In other words, the method does not select a CAD feature in the set if it covers a surface that is not erased by the feature added at the previous iteration while erases at least a part of a surface covered by the feature added at the previous iteration. Such an exclusion improves the method by selecting the feature with less erasing effect on the intermediate sequence at each iteration step thereby enables the method to achieve higher covering score with fewer number of features in the sequence (i.e., promoting higher ratios between the covering score and the number of feature). Indeed, such an exclusion provides an ordering (e.g., a strict partial order) among the CAD feature in the set. In other words, it is meant that a CAD feature in the set is of lower order with respect to the feature added at the previous iteration if it covers a surface that is not erased by the feature added at the previous iteration while erases at least a part of a surface covered by the feature added at the previous iteration. This exclusion improves the generation of the CAD feature tree by excluding adding CAD feature to the sequence of a lower order. Furthermore, the ordering reduces the number of potential CAD features to be added thereby improving the computational efficiency of the method.

In such examples of exclusion, the method may (additionally to the termination examples discussed above) terminate performing the iterations when, upon the exclusion, no features in the (updated) set of CAD features left to be added to the intermediate sequence resulting from the previous iteration.

In examples, the method may obtain an ordering as discussed above on the set of CAD features as a pre-processing step. In such examples, the method may further comprise, before the determining of an optimal sequence computing a feature order of the set of CAD features. In other words, the method may compute an order between two features of the set (e.g., every two features of the set or a subset of all possible pairs of two features of the set) such that a first feature comes before a second feature of the two if the first feature has a lower order compared to the second feature according to the feature order. The feature ordering may order a first CAD feature relative to a second feature when the first CAD feature erases at least a part of a surface covered by the second CAD feature and covering a surface that is not erased by the second CAD feature. This improves the method by providing an order between the features in the set such that each rank the features (at least partially) based on the contribution to the covering (upon being added to the sequence). Furthermore, as the method computes the order before the determining of an optimal sequence, i.e., in an offline stage, the computational efficiency of the method is improved. The method may later use the computed ordering in an online stage upon providing the discrete geometrical representation to the method in order to generate the CAD feature tree. In the online stage, the method may use the computed ordering to impose an exclusion restriction in iterations of selection of CAD features as discussed above.

The method may further comprise, before the determining of an optimal sequence, partitioning a surface of the discrete geometrical representation into meta-faces. Each meta-face may comprise one or more faces. Each face of the mete-face may be a mesh face when the discrete geometrical representation is a mesh. Each two faces of a meta-face (i.e., each two faces which belong to a meta-face) are erased and covered by same one or more CAD features. In other words, each meta-face defines an equivalence relation between the faces. The method then may use meta-faces instead of surfaces of the discrete geometrical representation (e.g., face of the 3D mesh in examples where the discrete geometrical representation is a 3D mesh). The partitioning improves the solution as the number of meta-faces is much smaller than the number of surfaces of the discrete geometrical representation and the partitioning to meta-faces allows the method to only treat the meta-faces instead of surfaces, thereby improving the computational efficiency.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

For instance, in the step of providing a set of CAD features, a user may further provide additional CAD features in the provided set by loading one or more database of CAD features. The one or more loaded databases may comprise CAD features particularly relevant to a technical field (e.g., features presenting standard holes according to a standard of said technical field). By "database", it is meant any collection of data (i.e., information) organized for search and retrieval (e.g., a relational database, e.g., based on a predetermined structured language, e.g., SQL). When stored on a memory, the database allows a rapid search and retrieval by a computer.

Yet for instance, the step of determining an optimal sequence of CAD features from the set of CAD features may be partially performed upon one or more action of user. In examples, the method may generate several sequence of CAD features as outputs with a significant same level of optimality and the user may choose the one that fits better with practical constraint of fabrications.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

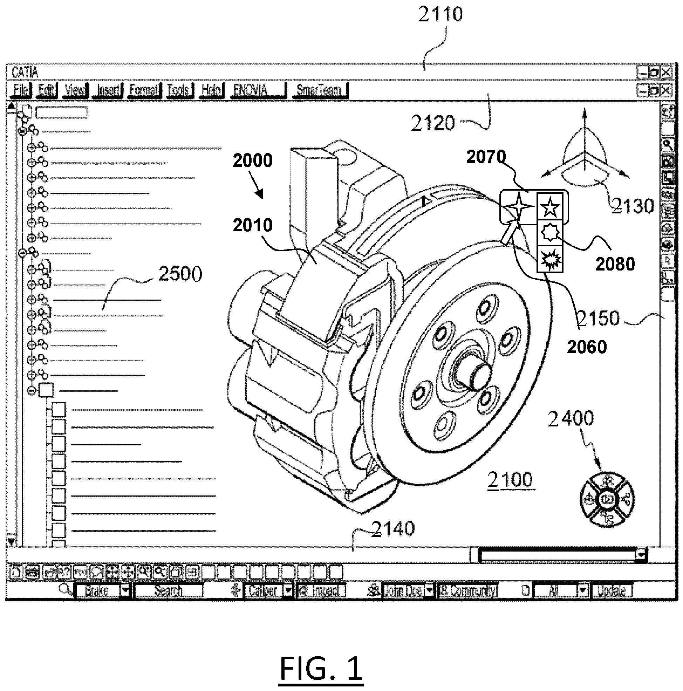

FIG. 1 shows an example of the GUI of the system, wherein the system is a CAD system. The model 2000 is an example of the discrete geometrical representation provided to the method.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching, or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The displayed feature-tree data may be the generated CAD feature tree obtained by the method. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

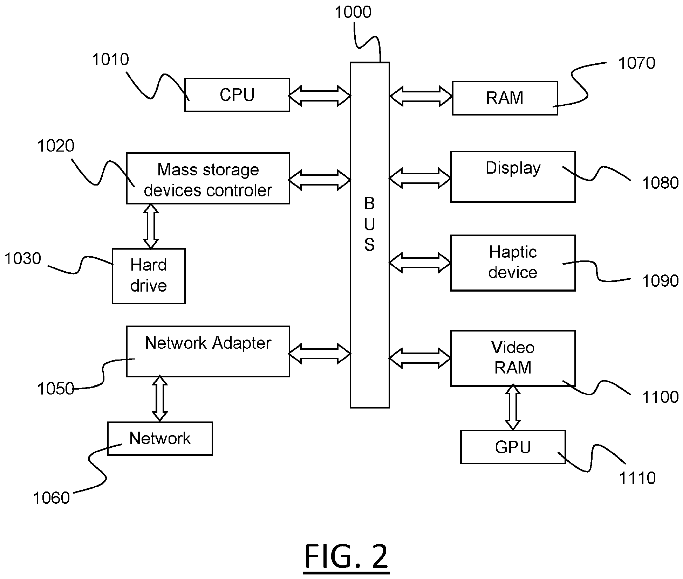

FIG. 2 shows an example of the system, wherein the system is a client computer system, e.g. a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard, or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Implementations of the methods are now discussed.

The implementations introduce retrieval (i.e., generation) of a CAD feature tree starting from a segmented mesh as a discrete geometrical representation of a mechanical product, and a pool of features detected and fitted on this mesh. The implementations further introduce several geometrical heuristics to speed-up such a retrieval. In particular, the implementations infer exclusions, and order relations between the features and the influence of selecting a feature during an optimization on to the available final trees fidelities to the mesh.

In order to develop the several heuristics to guide the feature tree optimization, the implementations exploit a new mathematical definition of CAD features with respect to the faces of the mesh. According to this definition a feature is represented by two sets of faces: its interior and its boundary. This representation is built using computational geometry. From this representation, the implementations compute a new partition of the input mesh to speed-up the computational time of the heuristics.

The first heuristic's goal is to detect if a feature is already included inside a feature tree. In such cases, adding this feature does not have any influence on the CAD tree reconstruction accuracy. It is done by using set operations on their sets representation.

The second heuristic's goal is to infer order relations between pairs of features by detecting if one of them impacts negatively the other one when it has been already in the feature tree. It is done using set operations on the sets representation of each feature. Those order relations are then expanded using graph theory.

The third heuristic's goal is to compute the theoretical maximum accuracy reachable by a feature tree when adding a feature to it. The third heuristic uses both other heuristics to get a basket of available features when adding a feature. The implementations compute the theoretical maximum accuracy using set operations on the sets of the feature tree, the feature, and the basket of remaining features.

The implementations exploit the introduced heuristics to improve guiding a user to select detected features in a relevant order in the process of reconstructing a CAD feature tree. The implementations may also exploit the heuristics to speed-up an automatic feature tree optimization. For example, the implementations may exploit the heuristics in the optimization in a computer-implemented method for generating a CAD feature tree from a discrete geometrical representation by determining one or more sequences of CAD features from a set (i.e., pool) of CAD features by optimizing an objective function as discussed in European Patent Application filed on June 27, 2022 by DASSAULT SYSTEMES and titled "CAD FEATURE TREE OPTIMIZATION" which is incorporated herein by reference. In such an optimization, the heuristics guide the exploration of all candidate feature trees by pruning branches which will lead to poor reconstruction accuracy.

The implementations have advantages in using the heuristics. For example, the implementations use a pool of features as an entry which can be as complete as possible. Furthermore, the implementation may retrieve several plausible trees for an input mesh. In addition, the implementations reconstruct a feature tree that maximize its fidelity with respect to the input shape, while being accurate and as simple as possible with respect to the number of features it contains, and/or any other criteria defined by the user (e.g., physical simulation criteria).

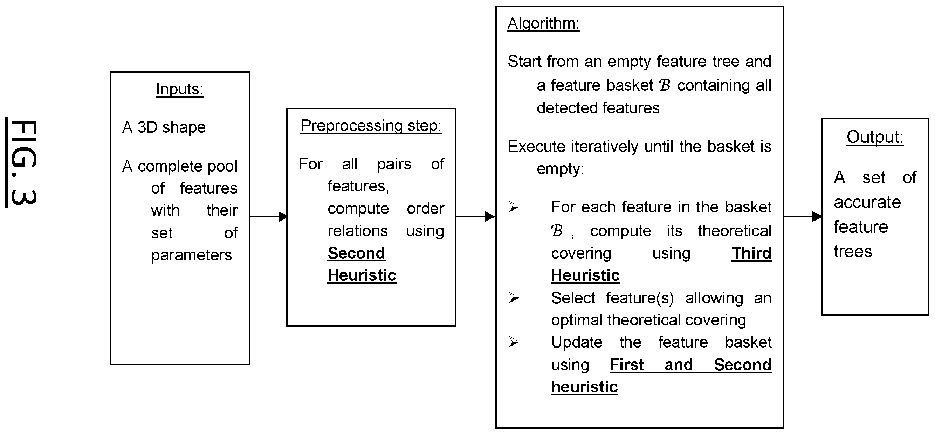

FIG. 3 presents an example flowchart of the implementations. In this example, the implementations accept as inputs a 3D shape (as the discrete geometrical representation) and a complete pool of features with their set of parameters (as the set of CAD features). The implementations may then perform a pre-processing step and compute order relations for all pairs of features in the pool using the second heuristic. The implementations then start the determining of the optimal sequence of features from an empty feature tree and a feature basket containing all detected features. The implementations then execute iteratively until the basket is empty: computing a theoretical covering for each feature in the basket using the third heuristic, select feature(s) allowing an optimal theoretical covering, and updating the feature basket using the first and the second heuristic. Upon finishing the iterations (e.g., when the feather basket is empty), the implementations output a set of feature trees based on the selected features in the iterations.

The implementations use the notation of $M$ for a 2-manifold embedded in $\mathbb{R}^3$. A feature $f$ is an object defined by two open disjoints domains $f_-$ and $f_+$ of $\mathbb{R}^3$, , where $\Omega(f) = f_- \cup f_+$, $\Omega(f)$ is respective volume of the feature, and the interior of $f$ with respect to $M$ is defined by $f_{(\pm)}^M = f_{(\pm)} \cap M$. Furthermore, $\partial f_+^M$ (resp. $\partial f_-^M$) is said to be the positive boundary (resp. negative boundary) of $f$ with respect to $M$. In the implementations, the boundary of a feature with respect to a mesh can be seen as the mesh's faces covered by the feature and the interior can be seen as the mesh's faces erased by the feature.

According to the implementations, elementary features are split into two categories, material removal, i.e., the features with $f_+ = \emptyset$ (e.g., splits or pockets), and material addition, i.e., the features with $f_- = \emptyset$ (e.g., pads).

The Implementations denote by $\mathcal{F}$ the space of all features and by $\mathcal{F}_e \subset \mathcal{F}$ the set of elementary features. Furthermore, the implementations define on $\mathcal{F}$ the operation $\star$ as

$$\star: \left| \begin{array}{ccc} \mathcal{F} \times \mathcal{F} & \longrightarrow & \mathcal{F} \\ (f,g) & \longmapsto & f \star g \end{array} \right.$$

such that

$$(f \star g)_- = [f_- \setminus g_+] \cup g_-,$$

$$(f \star g)_+ = [f_+ \setminus g_-] \cup g_+.$$

The operation * is not commutative but it is associative, thereby making ($\mathcal{F}$, $\star$) a semigroup. Furthermore, and considering the neutral element $e_{\mathcal{F}}$ defined by $\Omega(e_f) = \emptyset$ where ($\mathcal{F}$, $\star$) is a monoid.

For any surface (i.e., manifold) $M$, and for all pair of features $(f, g) \in \mathcal{F}$, it holds that:

$$\partial(f \star g)_-^M = (\partial f_-^M \setminus g^M) \cup (\partial g_+^M \cap f_-^M) \cup (\partial g_-^M \setminus f_-^M),$$

$$\partial(f \star g)_+^M = (\partial f_+^M \setminus g^M) \cup (\partial g_-^M \cap f_+^M) \cup (\partial g_+^M \setminus f_+^M).$$

Given a basket $B$ c $F_e$, as a finite set of elementary features, the implementations define

$$\mathcal{S}(\mathcal{B}) = \left\{ (f_1, \cdots, f_k) \in \mathcal{B}^k \mid k \in \mathbb{N} \right\},$$

and

$$\mathcal{S}_u(\mathcal{B}) =$$

$$\left\{ (f_1, \cdots, f_k) \in \mathcal{S}(\mathcal{B}) \mid f_i \neq f_j \text{ if } i \neq j \right\}$$

where S(B) is the set of feature sequences generated by *B.*
The implementations further define the map:

$$\mathrm{T}: \left| \begin{array}{ccc} \mathcal{S}(\mathcal{B}) & \longrightarrow & \mathcal{F} \\ (f_1, \cdots, f_k) & \longmapsto & f_1 \star \cdots \star f_k \end{array} \right.$$

and $T_u(B) = T(S_u(B))$ is the set of feature trees generated by *B.*
The implementations associate to each t ∈ *T(B),* a score p(t) defined by:

$$\rho^M(t) = \frac{|\partial t_+^M|}{|M|}.$$

The implementations also define an operation $* : S(B) \times S(B) \rightarrow S(B)$ as

$$(f_1, \cdots, f_k) * (f_{k+1}, \cdots, f_n) = (f_1, \cdots, f_k, f_{k+1}, \cdots, f_n)$$

which is associative, and for s, s' $\in$ *S(B)* the following holds:

$$T(s * s') = T(s) \star T(s').$$

The implementations approximate a surface M by a polyhedral surface $\tilde{M}$ (as the provided discrete geometrical representation of a mechanical product), using a triangle mesh $\mathcal{M}(V_{\mathcal{M}}, E_{\mathcal{M}}, T_{\mathcal{M}})$ where $V_M$ is the set of vertices of the mesh, $E_M$ is the set of edges of the mesh, and $T_M$ is the set of triangle faces of the mesh. Such approximation is associated with a C° morphism $\phi: M \to \tilde{M}$ that is invertible and piecewise-$C^1$.

The implementations then define the interior and boundary of a feature *f* $\in$ *F* with respect to $\tilde{M}$ as

$$\mathcal{I}_{(\pm)}^{\tilde{M}}(f) = \phi\big(f_{(\pm)}^M\big), \qquad C_{(\pm)}^{\tilde{M}}(f) = \phi\big(\partial f_{(\pm)}^M\big)$$

and the interior and boundary of $f \in \mathcal{F}$ with respect to the mesh $\mathcal{M}$ through the faces:

$$\mathcal{I}_{(\pm)}^{\mathcal{M}}(f) = \big\{\tau \in T_{\mathcal{M}} \mid \tau \subset \mathcal{I}_{(\pm)}^{\tilde{M}}(f)\big\}, \; C_{(\pm)}^{\mathcal{M}}(f) = \big\{\tau \in T_{\mathcal{M}} \mid \tau \subset C_{(\pm)}^{\tilde{M}}(f)\big\},$$

which is approximately computable.

FIG.s 4A and 4B show an example 3D object and a pad feature of the 3D object, respectively.

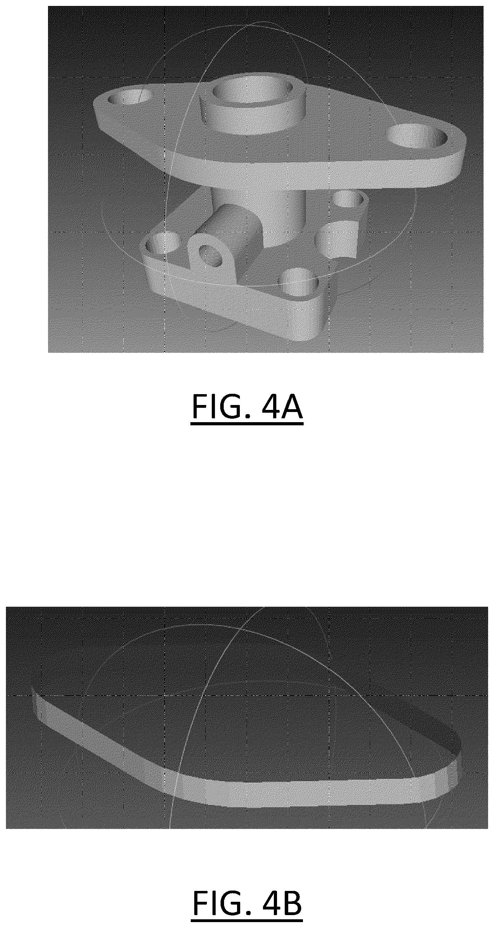

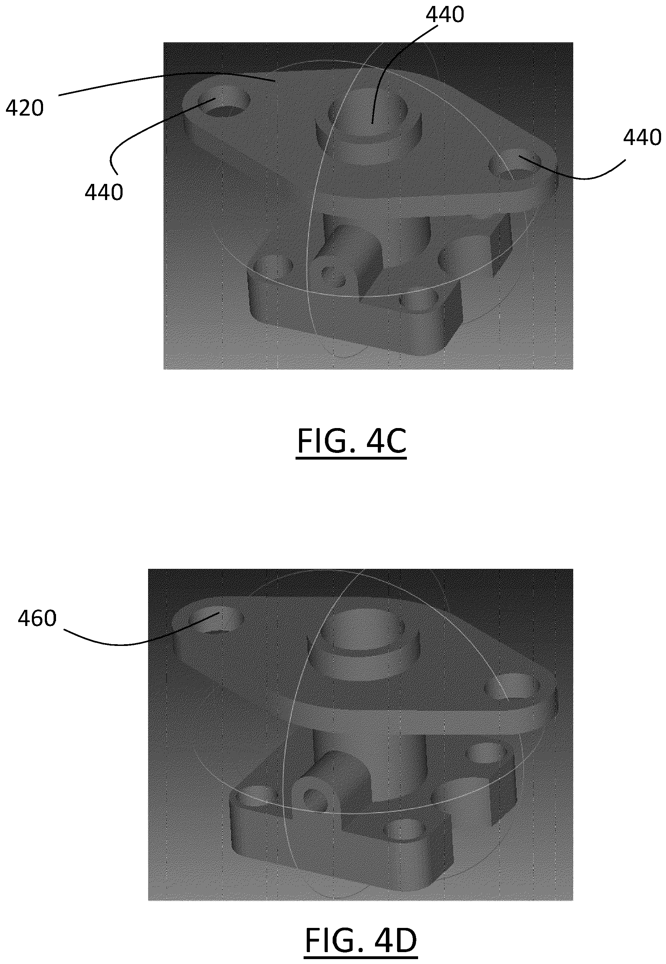

FIG. 4C shows the cover and the interior of the pad. For the pas $\mathcal{I}_-^{\mathcal{M}}(f) = \; C_-^{\mathcal{M}}(f) = 0$, while $C_+^{\mathcal{M}}(f)$ is represented by parts 420 and $\mathcal{I}_+^{\mathcal{M}}(f)$ is represented by parts 440.

FIG. 4D shows a pocket feature with a circular sketch associated to a hole in the object of FIG. 4A as well as its cover and its interior. For the pocket $\mathcal{I}_+^{\mathcal{M}}(f) =$

$$C_+^{\mathcal{M}}(f) = \mathcal{I}_-^{\mathcal{M}}(f) = 0,$$

and

$$C_-^{\mathcal{M}}(f)$$

is represented by parts 460.

Having computed the boundary faces

$$C_{(\pm)}^{\mathcal{M}}(f)$$

and interior faces $\mathcal{I}_{(\pm)}^{\mathcal{M}}(f)$, for every feature *f* of a basket *B*, the implementations build a partition $\mathcal{P}_B^{\mathcal{M}}$ of the faces of the mesh into meta-faces that are related to the same features. For example, each meta-faces may comprise the faces that are covered by the same features and inside the same features.

By defining

$$\mathcal{F}_{\mathcal{C}}(\tau) = \{f \in \mathcal{B} \mid \tau \in \mathcal{C}^{\mathcal{M}}_{(\pm)}(f)\},$$

$$\mathcal{F}_{\mathcal{I}}(\tau) = \{f \in \mathcal{B} \mid \tau \in \mathcal{I}^{\mathcal{M}}_{(\pm)}(f)\},$$

the implementations consider the equivalence relation on the faces as $\forall(\tau, \tau') \in \mathrm{T}^2_{\mathcal{M}}$,
$\tau \mathcal{R} \tau' \iff [\mathcal{F}_{\mathcal{C}}(\tau) = \mathcal{F}_{\mathcal{C}}(\tau')$ and $\mathcal{F}_{\mathcal{I}}(\tau) = \mathcal{F}_{\mathcal{I}}(\tau')]$.

The "meta-faces" are the elements of $P_B = T_M / R$, i.e. the equivalence classes. The area of a meta-face $U \in P_B$ is defines as:

$$\mathcal{A}(U) = \sum_{\tau \in U} |\tau|.$$

The implementations may perform such a partitioning of a surface of the discrete geometrical representation into meta-faces before determining a sequence of CAD features.

This partition is useful as it allows the implementations to only treat the meta-faces as if they were faces and the number of meta-faces is much less than the number of faces. Using meta-faces, the implementations do not need to deal with each face individually and keep all the faces indices.

The implementations consider $\mathcal{C}^{\mathcal{M}}_{(\pm)}(f)$, $\mathcal{I}^{\mathcal{M}}_{(\pm)}(f)$ as being sets of meta-faces instead of faces, $\mathcal{F}_{\mathcal{K}}(U, \mathcal{B}') = \{f \in \mathcal{B}' \mid U \in \mathcal{K}(f)\}$ for $\mathcal{B}' \subset \mathcal{B}$, $U \in \mathcal{P}^{\mathcal{M}}_{\mathcal{B}}$ and $\mathcal{K} \in \{\mathcal{C}^{\mathcal{M}}_-, \mathcal{C}^{\mathcal{M}}_+, \mathcal{I}^{\mathcal{M}}_-, \mathcal{I}^{\mathcal{M}}_+\}$ where $N_{\mathcal{K}}(U, \mathcal{B}') = |\mathcal{F}_{\mathcal{K}}(U, \mathcal{B}')|$.

The implementations, then define the new covering score as follow, for $t \in T_u(B)$

$$\rho^{\mathcal{M}}(t) = \frac{1}{\mathcal{A}_{\mathcal{M}}} \sum_{U \in \partial t^{\mathrm{M}}_+} \mathcal{A}(U).$$

## *First Heuristic: Exclusions*

For the first heuristic, the implementations define a relation $\varepsilon$ on the space of features $F$ as

$$\forall(f_1, f_2) \in \mathcal{F}, \quad f_2 \mathcal{E} f_1 \iff \mathcal{C}^{\mathcal{M}}_{(\pm)}(f_2) \subset \mathcal{C}^{\mathcal{M}}_{(\pm)}(f_1)$$

where

$$\mathcal{C}^{\mathcal{M}}_{(\pm)}(f_2) \subset \mathcal{C}^{\mathcal{M}}_{(\pm)}(f_1) \iff \mathcal{C}^{\mathcal{M}}_{(\pm)}(f_1) \cap \mathcal{C}^{\mathcal{M}}_{(\pm)}(f_2) = \mathcal{C}^{\mathcal{M}}_{(\pm)}(f_2).$$

According to this definition, for two features $f_1, f_2 \in F$, $f_2$ is defined to be excluded by $f_1$, if $f_2 \varepsilon f_1$. Furthermore, if $f_2 \varepsilon f_1$ and $f_1 \varepsilon f_2$, $f_1$ and $f_2$ are mutually excluded.

As discussed above, according to the first heuristic, the selection of the CAD feature comprises excluding from the selection CAD features which cover a surface already covered by the intermediate sequence.

*Second Heuristic: Order relations*

For the second heuristic, the implementations define a relation $R$ on a basket $B \subset F_e$, as

$$\forall(f_1, f_2) \in \mathcal{B}^2, \quad f_1 \mathcal{R} f_2 \quad \Leftrightarrow \quad [\, \mathcal{I}^{\mathcal{M}}_{(\pm)}(f_1) \cap \mathcal{C}^{\mathcal{M}}_{(\pm)}(f_2) \neq \emptyset \ \text{ and } \ \mathcal{I}^{\mathcal{M}}_{(\pm)}(f_2) \cap \mathcal{C}^{\mathcal{M}}_{(\pm)}(f_1) = \emptyset \,]$$

In other words, $f_1 R f_2$ means "$f_1$ erases some of the cover (i.e., surface covered) of $f_2$ while $f_2$ erases no cover of $f_1$". The relation $R$ is antisymmetric.

The implementations further make the following assumption:

$$\forall k \geq 2, \ \forall(f_1, \cdots, f_k) \in \mathcal{B}^k, \quad [f_1 \mathcal{R} f_2 \wedge f_2 \mathcal{R} f_3 \wedge \cdots \wedge f_{k-1} \mathcal{R} f_k] \Rightarrow \neg[f_k \mathcal{R} f_1],$$

where $\neg$ denotes a logical negation.

The implementations then build a strict partial order $\prec$ on B from the relation $R$ as follows

- If $f_1 R f_2$ then $f_1 \prec f_2$, and
- If $f_1 \prec f_2$ and $f_2 \prec f_3$ then $f_1 \prec f_3$.

As discussed above, according to the second heuristic, the selection of the CAD feature comprises excluding from the selection CAD features which erase at least a part of a surface covered by the feature added at the previous iteration and covering a surface that is not erased by the feature added at the previous iteration.

These relations can be considered as directed (i.e., oriented) edges inside a graph whose nodes are the features. Each relation may be represented in an adjacency matrix **P** defines as:

$$\begin{cases} \mathbf{P}_{ii} = 0 \\ \mathbf{P}_{ij} = \begin{cases} 1 \ \text{ if } \ f_j \mathcal{R} f_i \\ 0 \ \text{otherwise} \end{cases} \end{cases}$$

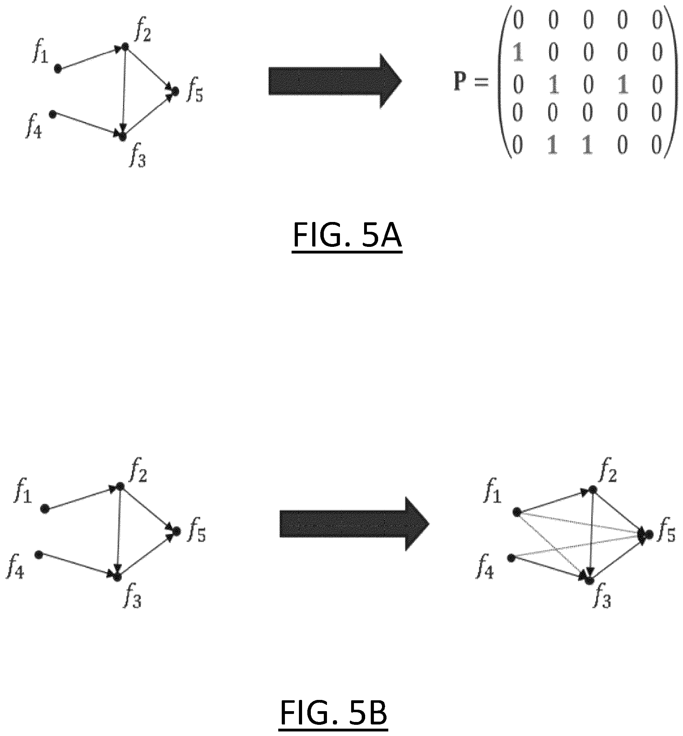

FIG. 5A shows an example of such a matrix **P** (right) for a respective graph (left).

The matrix **P** gives the paths of size 1 between two nodes. The implementations also need to get all the preceding relations that can be induced from the graph. For example, for each pair of nodes the implementations verify if there exists a path between the nodes respective an orientation. In other words, for every pair of nodes, the implementations check if one can build a path between the nodes of the pair by travelling along the edges of the graph in the right direction (as each edge is oriented). If such a path exists, the implementations determine which point of the pair is the starting point and which point is the ending point, i.e. the "orientation of the path". Indeed the path is not reversible because of the orientation of the edges of the graph. Thus, the implementations need to compute the transitive closure of the graph with its corresponding adjacency matrix $\mathbf{P}^*$. FIG. 5B shows an example of such a transitive closure (right) of the graph (left).

As discussed below, the following relation holds

$$\mathbf{P}^* = \mathbf{P} + \mathbf{P}^2 + \cdots + \mathbf{P}^{n-1},$$

where n is the number of features. The relations hold thanks to the following results I and II:

I. *For* $l \geq 1$, $(\mathbf{P}^l)_{ij}$ = number of paths of length $l$ in the graph from $j$ to $i$

II. **P** is nilpotent: $\exists\, k \in [\![1, n]\!]: \ \mathbf{P}^k = 0_n$

The result I can be shown by induction as:

- For $l = 1$, the result is immediate by definition of P and because the paths of size 1 are the oriented edges of the graph.

- Let $l \in \mathbb{N}$ such that

$(\mathbf{P}^l)_{ij}$ = number of paths of length $l$ in the graph from $j$ to i. Then, $(\mathbf{P}^{l+1})_{ij} = \sum_{m=1}^{n} (\mathbf{P}^l)_{im} \, \mathbf{P}_{mj}$. However, a path of length $l$ + 1 from $j$ to i can be decomposed into a path of length $l$ from a certain m to i preceded by a path of length 1 from $j$ to m. Thus, the result comes directly from the induction hypothesis which says that $(\mathbf{P}^l)_{im}$ is the number of paths of length $l$ from m to i.

The result II holds because the precedence graph does not contain any cycle, and every path in this graph has a size inferior or equal to $n$ - 1. There are no paths of size $n$. Thus $\mathbf{P}^n = 0_n$, which leads to the result.

Combining those two results I and II gives

$$\mathbf{P}^* = \mathbf{P} + \mathbf{P}^2 + \cdots + \mathbf{P}^{k-1}$$

where $k$ is the smallest integer such that $\mathbf{P}^k = 0_n$ and where $\mathbf{P}^*$ represents the adjacency matrix containing all number of paths connecting two nodes of the graph.

Finally, by construction, the non-zeros of $\mathbf{P}^*$ indicates the order relations constraints that needed to impose to the set of features.

*Third Heuristic: Theoretical covering*

For the third heuristic, considering a feature sequence s $\in S_u(B)$, the implementations introduce the notion of basket $B_s$ of available features to complete $T(s)$ as follows

- For an empty sequence: $B_\emptyset = B$, and
- 

$$\mathcal{B}_{s' * f} = \mathcal{B}_{s'} \backslash (\{f\} \cup prec(f) \cup exc(s' * f))$$

where

$$\mathrm{prec}(f) = \{f' \in \mathcal{B} \mid f' \prec f\} \text{ and } exc(s) = \{f' \in \mathcal{B} | f' \, \mathcal{E} \, T(s)\}.$$

The implementations define scalars $N_{\mathcal{K}}(U, \mathcal{B}_s)$ for $\mathcal{K} \in \{\mathcal{C}_-^{\mathcal{M}}, \mathcal{C}_+^{\mathcal{M}}, \mathcal{J}_-^{\mathcal{M}}, \mathcal{J}_+^{\mathcal{M}}\}$ and for each $U \in \mathcal{P}_{\mathcal{B}}^{\mathcal{M}}$ which are iteratively computable:

- 

$$N_{\mathcal{K}}(U, \mathcal{B}_\emptyset) = |\{f' \in \mathcal{B} \mid U \in \mathcal{K}(f')\}|$$

- 

$$N_{\mathcal{K}}\big(U, \mathcal{B}_{s' * f}\big) = \begin{cases} N_{\mathcal{K}}(U, \mathcal{B}_{s'}) - 1 & \text{if } U \in \mathcal{K}(f) \\ N_{\mathcal{K}}(U, \mathcal{B}_{s'}) & \text{otherwise} \end{cases}$$

and two sets $\mathcal{C}_{ext}^{\mathcal{M}}(\mathcal{B}_s)$ and $\mathcal{C}_{int}^{\mathcal{M}}(\mathcal{B}_s)$ as

$$\mathcal{C}_{ext}^{\mathcal{M}}(\mathcal{B}') = \left\{ U \in \mathcal{P}_{\mathcal{B}}^{\mathcal{M}} \mid \left( N_{\mathcal{C}_+^{\mathcal{M}}}(U, \mathcal{B}') > 0 \right) \vee \left( N_{\mathcal{C}_-^{\mathcal{M}}}(U, \mathcal{B}'). N_{\mathcal{J}_+^{\mathcal{M}}}(U, \mathcal{B}') > 0 \right) \right\},$$

$$\mathcal{C}_{int}^{\mathcal{M}}(\mathcal{B}') = \left\{ U \in \mathcal{P}_{\mathcal{B}}^{\mathcal{M}} \mid \left( N_{\mathcal{C}_-^{\mathcal{M}}}(U, \mathcal{B}') > 0 \right) \vee \left( N_{\mathcal{C}_+^{\mathcal{M}}}(U, \mathcal{B}'). N_{\mathcal{J}_-^{\mathcal{M}}}(U, \mathcal{B}') > 0 \right) \right\}$$

the theoretical covering reachable from the sequence $s \in \mathcal{S}_u(\mathcal{B})$ is

$$\mathcal{C}_{th}^{\mathcal{M}}(s) = \mathcal{C}_+^{\mathcal{M}}\big(T(s)\big) \cup \Big(\mathcal{C}_{ext}^{\mathcal{M}}(\mathcal{B}_s) \setminus \mathcal{I}_+^{\mathcal{M}}(T(s))\Big) \cup \Big(\mathcal{C}_{int}^{\mathcal{M}}(\mathcal{B}_s) \cap \mathcal{I}_+^{\mathcal{M}}\big(T(s)\big)\Big).$$

The implementations can compute the corresponding area for the sequence s as

$$\left|\mathcal{C}_{th}^{\mathcal{M}}(s)\right| = \sum_{U \in \mathcal{C}_{th}^{\mathcal{M}}(s)} \mathcal{A}(U)$$

with the associated score as $\rho_{th}(s) = \dfrac{|\mathcal{C}_{th}^{\mathcal{M}}(s)|}{\mathcal{A}_{\mathcal{M}}}$. In other words, the surface covering score comprises a ratio between a surface covering reachable by the intermediate sequence when adding the CAD feature, and a surface area of the discrete geometrical representation.

Considering a basket of elementary features *B* previously detected or obtained, the implementations exploit the discussed heuristics for CAD reconstruction as the following:

- The implementations start from an empty features sequence.
- The implementations compute all the order relations once for all feature pairs and expanded as seen in the definition of the second heuristic.
- For adding a feature to the feature sequence, the implementations compute the theoretical covering of the new feature sequence and indicates if the choice of this feature prevents the reconstruction from having a good accuracy with respect to the input mesh.
- Thereby, the implementations try different features and select the ones with the better theoretical covering until there is no more features available in the basket or until the feature sequence is convenient for the user.

**Claims**

1. A computer-implemented method for generating a CAD feature tree from a discrete geometrical representation of a mechanical product, the method comprising:

    - providing:

        ○ the discrete geometrical representation (*M*), and
        ○ a set (B) of CAD features (*f*), each CAD feature (*f*) comprising an interior and a boundary, the boundary representing a surface covered by the feature (*f*) and the interior representing a surface erased by the feature (*f*); and

    - determining an optimal sequence of CAD features from the set of CAD features (B) providing an optimal surface covering of the discrete geometrical representation (*M*).

2. The method of claim 1, wherein the determining of an optimal sequence of CAD features comprises iterations of:

    - adding a CAD feature to an intermediate sequence resulting from a previous iteration by selecting the CAD feature from the set, the selection being based on a surface covering score;

    wherein the surface covering score represents a surface covering reachable when adding the CAD feature to the intermediate sequence.

3. The method of claim 2, wherein the selection of the added CAD feature is based on a highest surface covering score.

4. The method of any of claims 2 to 3, wherein the surface covering score comprises a ratio ($\rho_{tn}(s)$) between a surface covering ($\left|\mathcal{C}_{th}^{\mathcal{M}}(s)\right|$) reachable by the intermediate sequence (s) when adding the CAD feature, and a surface area ($A_M$) of the discrete geometrical representation (*M*).

5. The method of any of claims 2 to 4, wherein each iteration further comprises:

   - removing the added CAD feature from the set of CAD features.

6. The method of any of claims 2 to 5, wherein the selection of the CAD feature comprises excluding from the selection:

   - CAD features which cover a surface already covered by a result of the intermediate sequence, and/or
   - CAD features which erase at least a part of a surface covered by the feature added at the previous iteration and covering a surface that is not erased by the feature added at the previous iteration.

7. The method of any of claims 1 to 6, wherein the method further comprises, before the determining of an optimal sequence:

   - computing a feature order of the set of CAD features, the feature order ordering a first CAD feature relative to a second feature when the first CAD feature erases at least a part of a surface covered by the second CAD feature and covering a surface that is not erased by the second CAD feature.

8. The method of any of claims 1 to 7, wherein the method further comprises, before the determining of an optimal sequence:

   - partitioning a surface of the discrete geometrical representation into meta-faces each comprising one or more faces, each two faces of a meta-face being erased and covered by same one or more CAD features.

9. The method of any of claims 1 to 8, wherein the method further comprises:

   - building a feature tree from the determined optimal sequence of CAD features.

10. A computer program comprising instructions for performing the method according to any one of claims 1 to 9.

11. A computer readable storage medium having recorded thereon the computer program of claim 10.

12. A system comprising a processor coupled to a memory, the memory having recorded thereon the computer program of claim 10.

FIG. 1

## FIG. 2

FIG.3

Inputs:

A 3D shape

A complete pool of features with their set of parameters

→

Preprocessing step:

For all pairs of features, compute order relations using **Second Heuristic**

→

Algorithm:

Start from an empty feature tree and a feature basket $\mathcal{B}$ containing all detected features

Execute iteratively until the basket is empty:

➢ For each feature in the basket $\mathcal{B}$, compute its theoretical covering using **Third Heuristic**
➢ Select feature(s) allowing an optimal theoretical covering
➢ Update the feature basket using **First and Second heuristic**

→

Output:

A set of accurate feature trees

FIG. 4A

FIG. 4B

FIG. 4C

FIG. 4D

$$P = \begin{pmatrix} 0 & 0 & 0 & 0 & 0 \\ 1 & 0 & 0 & 0 & 0 \\ 0 & 1 & 0 & 1 & 0 \\ 0 & 0 & 0 & 0 & 0 \\ 0 & 1 & 1 & 0 & 0 \end{pmatrix}$$

## FIG. 5A

## FIG. 5B

Europäisches
Patentamt

European
Patent Office

Office européen
des brevets

# EUROPEAN SEARCH REPORT

Application Number

EP 22 30 5934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU Q ET AL: "Constructing 3D CSG Models from 3D Raw Point Clouds", COMPUTER GRAPHICS FORUM : JOURNAL OF THE EUROPEAN ASSOCIATION FOR COMPUTER GRAPHICS, WILEY-BLACKWELL, OXFORD, vol. 37, no. 5, 8 August 2018 (2018-08-08), pages 221-232, XP071489934, ISSN: 0167-7055, DOI: 10.1111/CGF.13504 * abstract * * figure 2 * * Section 1.1 "Related Works"; page 222 – page 224 * * Section 2. "Overview"; page 224 * | 1-12 | INV. G06F30/10 G06T17/00 |
| X | US 2020/211281 A1 (RANDON GUILLAUME [FR] ET AL) 2 July 2020 (2020-07-02) * figure 3 * * paragraph [0004] * * paragraph [0009] * * paragraph [0084] * * paragraph [0104] * | 1-12 | |
| X | JUN WANG ET AL: "A framework for 3D model reconstruction in reverse engineering", COMPUTERS & INDUSTRIAL ENGINEERING, vol. 63, no. 4, 1 December 2012 (2012-12-01), pages 1189-1200, XP055110577, ISSN: 0360-8352, DOI: 10.1016/j.cie.2012.07.009 * Section 2. Overview of our Framework; page 1192 * * Section 5. Solid Feature Reconstruction; page 1193 – page 1194 * * Section 6. Surface Feature Reconstruction; page 1194 – page 1196 * | 1-12 | TECHNICAL FIELDS SEARCHED (IPC) G06F G06T |

The present search report has been drawn up for all claims

| Place of search | Date of completion of the search | Examiner |
|---|---|---|
| Munich | 15 December 2022 | Ross, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 5934

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2022

| Patent document cited in search report | | Publication date | Patent family member(s) | | Publication date |
|---|---|---|---|---|---|
| US 2020211281 | A1 | 02-07-2020 | CN | 111382777 A | 07-07-2020 |
| | | | EP | 3675059 A1 | 01-07-2020 |
| | | | JP | 2020115339 A | 30-07-2020 |
| | | | US | 2020211281 A1 | 02-07-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3327593 A

- EP 21306754

**Non-patent literature cited in the description**

- **DU et al.** InverseCSG: Automatic conversion of 3D models to CSG trees. *ACM SIGGRAPH ASIA 2018,* 2018
- **WU et al.** Constructing 3D CSG Models from 3D Raw Point Clouds. *Computer Graphics Forum,* 2018, vol. 37, 221-232

- **WANG et al.** A framework for 3D model reconstruction in reverse engineering. *Computers and Industrial Engineering,* 2012, vol. 63 (4), 1189-1200